# FASCICULE DE BREVET EUROPEEN

(11) **EP 0 365 414 B1**
(45) Date de publication et mention de la délivrance du brevet: **09.03.1994**
(21) Numéro de dépôt: 89402852.1
(22) Date de dépôt: 16.10.1989
(51) Int. Cl.: B29C 67/14, B29C 37/00

(54) **Pièce moulée de carrosserie pour véhicule, et son procédé de fabrication**
Formteil für Fahrzeugkarosserien und Verfahren zu dessen Herstellung
Moulded part for car bodies and method for producing same

(30) Priorité: 17.10.1988 FR 8813634
(43) Date de publication de la demande: 25.04.1990
(73) Titulaire: HUTCHINSON, F-75008 Paris (FR)
(72) Inventeur: Nivert, Chantal, F-86140 Lencloitre (FR)
(74) Mandataire: Ramey, Daniel

(56) Documents cités:
- DE-A- 3 140 316
- DE-A- 3 539 088
- FR-A- 2 247 337
- FR-A- 2 272 142
- FR-A- 2 538 303
- GB-A- 2 079 667
- US-A- 4 349 643
- US-A- 4 587 160

## Description

L'invention concerne une pièce moulée de carrosserie pour véhicule, et son procédé de fabrication.

Actuellement, les pièces de carrosserie pour véhicules automobiles sont le plus souvent réalisées en tôle, mais la tendance est de les remplacer, au moins pour certaines, par des pièces moulées en matière synthétique qui, entre autres avantages, résistent mieux aux petits chocs.

Toutefois, ces pièces moulées sont en général réalisées dans des matières qui ne supportent pas les températures élevées, de l'ordre de 180 - 200° C par exemple, des bains dans lesquels passent nécessairement, après assemblage, les pièces de carrosserie sur les chaînes de peinture des constructeurs automobiles.

Sur ces chaînes, les pièces de carrosserie sont d'abord soumises à un traitement anti-corrosion par cataphorèse, puis reçoivent des couches successives de peintures d'apprêt et de finition.

Le traitement de protection par cataphorèse est sans effet sur les pièces moulées en matière synthétique, qui ne sont pas électroconductrices. La couche de protection, déposée sur des pièces métalliques par cataphorèse, va donc manquer sur les pièces moulées en matière synthétique qui, cependant devraient être soumises à un traitement parfaitement identique à celui des pièces métalliques, pour éviter toute différence d'aspect en fin de chaîne.

Par ailleurs, pour pouvoir être utilisées comme pièces de carrosserie sans nuire à l'esthétique des véhicules, les pièces moulées en matière synthétique doivent avoir de très bonnes qualités de surface. Or, pour avoir des caractéristiques mécaniques suffisantes (autoportance, rigidité, résistance mécanique, tenue en température), elles comprennent des charges, par exemple minérales, et/ou des éléments de renfort, tels qu'un mat de verre, dont la structure apparaît plus ou moins sur leur surface extérieure lorsque ces pièces ne sont pas moulées selon des procédés spéciaux, relativement onéreux.

Ces raisons font que les pièces de carrosserie en matière synthétique sont en général traitées indépendamment des pièces métalliques et sont peintes avant d'être montées sur les carrosseries, ce qui se traduit par un coût plus élevé et des risques de différences de teinte entre les pièces moulées en matière synthétique et les pièces métalliques des carrosseries.

On connaît, par le document GB-A-2 079 667, un procédé de moulage de pièces de carrosserie en matière plastique selon lequel on dépose une couche de revêtement superficiel sur un fond de moule, on place un renforcement dans le moule, et on injecte finalement une matière polymérisable dans le moule. La matière de revêtement contient un promoteur de réaction favorisant la polymérisation de la matière injectée ultérieurement, et qui est censé également "transférer le revêtement du fond de moule à la pièce moulée" et "lier le revêtement à la pièce moulée". Ce promoteur de réaction n'a pas d'action sur la matière du revêtement qui est chimiquement différente de la matière plastique de la pièce et qui n'est pas compatible avec elle.

On connaît également, par le document US-A-4.587.160, un procédé de fabrication d'une pièce de carrosserie moulée en matière synthétique et pourvue d'un revêtement électroconducteur permettant de la peindre par pulvérisation électrostatique. Pour cela, on dépose sur la surface interne d'un moule, de façon électrostatique, une couche de poudre contenant du graphite, on place dans le moule une matière plastique en feuille, on ferme le moule et on cuit la matière plastique, on démoule et on obtient une pièce à revêtement superficiel électroconducteur. Ce procédé ne permet pas d'obtenir, en sortie de moule, une pièce comportant déjà une couche de peinture primaire qui adhère fortement à la pièce moulée.

L'invention a notamment pour but d'apporter une solution simple, efficace et peu coûteuse à ces problèmes de la technique antérieure.

Elle a pour objet des pièces de carrosserie pour véhicules, réalisées en matière synthétique, qui soient rigides et autoportantes, capables de supporter les températures élevées des chaînes de peinture des usines de construction automobile, et qui présentent de plus les aspects de surface requis pour les pièces de carrosserie.

Elle a également pour objet des pièces de ce type qui puissent être fabriquées par moulage de façon simple et peu onéreuse.

Elle a encore pour objet des pièces de ce type, qui puissent subir les traitements de protection par cataphorèse et de peinture sur les chaînes de construction, exactement comme les autres pièces métalliques des carrosseries.

L'invention propose pour cela, une pièce moulée de carrosserie pour véhicule, réalisée en une matière synthétique polymérisée et comprenant une charge et/ou un élément de renfort tel qu'un mat de verre par exemple, éventuellement des inserts de fixation, et une couche superficielle lisse de peinture, notamment de peinture primaire, au moins sur sa surface extérieure visible, caractérisée en ce qu'elle est réalisée en matière résistant à des températures élevées, de l'ordre de 180° - 200° C par exemple, et en ce que ladite matière synthétique polymérisée et la peinture de ladite couche superficielle sont chimiquement compatibles et ont des réactions de polymérisation de même type, permettant l'accrochage de ladite matière et de la peinture l'un sur l'autre.

Une telle pièce de carrosserie peut passer sans inconvénients, avec les pièces métalliques, sur une chaîne de peinture d'une usine de construction automobile. Elle a de plus un bon aspect de surface et peut donc être utilisée comme pièce de carrosserie extérieure, sans nuire à l'esthétique du véhicule, car l'élément de renfort est recouvert par une couche superficielle lisse de peinture.

Selon une autre caractéristique de l'invention, ladite peinture est électroconductrice et/ou auto-démoulante.

On forme ainsi, au moulage, une couche primaire sur laquelle seront déposées les autres couches de peintures d'apprêt et de finition, et les pièces moulées en matière synthétique se comporteront en cataphorèse comme les pièces métalliques et pourront être soumises aux mêmes traitements sur les chaînes de peinture.

Selon une variante de réalisation, la pièce moulée comprend une couche intermédiaire d'une autre matière synthétique, entre l'élément de renfort et la couche superficielle de peinture, la matière de cette couche intermédiaire étant chimiquement compatible avec la peinture et la matière synthétique précitées, pour assurer une bonne liaison avec elles.

Cette couche intermédiaire de matière synthétique permet de masquer complètement la structure de l'élément de renfort et de la rendre invisible de l'extérieur, en donnant ainsi un aspect parfaitement lisse à la pièce moulée.

La ou les matières synthétiques précitées sont du type utilisables en procédé R.I.M., telles qu'un polyisocyanurate, un polycarbonate, un polyacrylamate, un polyester ou une polyurée, respectivement.

L'invention propose également un procédé de fabrication de pièces moulées de carrosserie pour véhicules, consistant à déposer sur des parois délimitant une cavité de moulage une couche de peinture fluide, notamment de peinture primaire, à placer dans la cavité de moulage un élément de renfort, tel par exemple qu'un mat de verre et/ou des inserts destinés à permettre la fixation ultérieure de la pièce, puis à injecter dans la cavité de moulage une matière synthétique polymérisable, caractérisé en ce qu'il consiste mouler la pièce en une matière synthétique résistant à des températures élevées, de l'ordre de 180° - 200° C par exemple, et qui est chimiquement compatible avec ladite peinture et a le même type de réaction de polymérisation que celle-ci. Cela permet d'assurer un bon accrochage de la couche de peinture sur la matière synthétique injectée.

Selon une autre caractéristique de l'invention, après le dépôt d'une couche de ladite peinture sur des parois de la cavité de moulage et avant de placer l'élément de renfort et les inserts éventuels dans cette cavité, le procédé consiste également à déposer sur cette couche de peinture une couche d'une autre matière synthétique polymérisable chimiquement compatible avec la matière synthétique injectée et avec la peinture de la couche superficielle.

Cette autre matière synthétique, ainsi que la première matière synthétique citée, sont avantageusement du type utilisable en procédé R.I.M.

Dans la description qui suit, faite à titre d'exemple, on se réfère aux dessins annexés dans lesquels:
la figure 1 est une vue schématique partielle en coupe d'un moule et d'une pièce selon l'invention ;
la figure 2 est une vue semblable à la figure 1, pour une variante de réalisation.

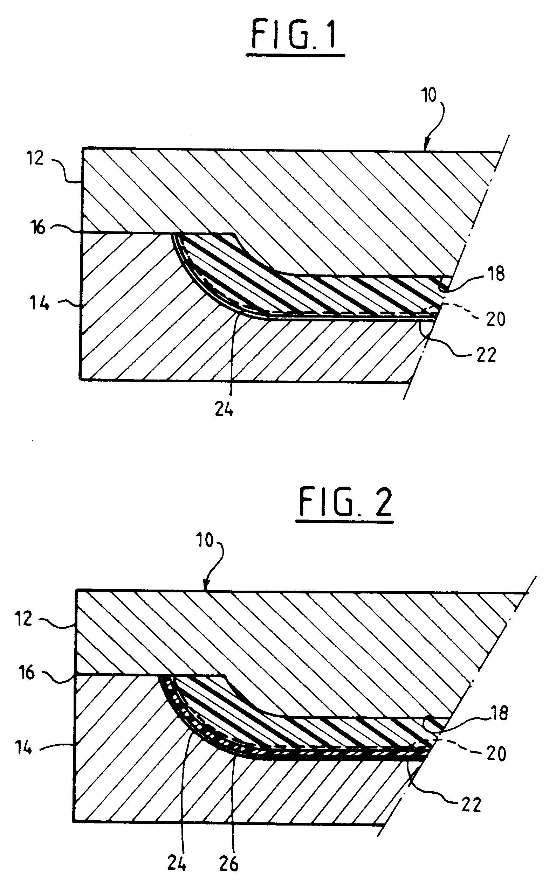

On a donc représenté en figure 1 une coupe transversale partielle d'un moule 10, comprenant une partie supérieure 12 et une partie inférieure 14 appliquées l'une sur l'autre selon un plan de joint 16 et délimitant entre elles une cavité de moulage 18 à la forme de la pièce à réaliser.

Cette pièce est un élément de carrosserie, par exemple un pare-chocs, une porte, une aile, un capot, etc... de véhicule automobile. Elle est réalisée par injection, dans la cavité de moulage 18, d'une matière synthétique polymérisable, de préférence une matière utilisable en R.I.M. (Réaction-Injection-Moulage), procédé selon lequel les différents constituants d'une matière synthétique polymérisable sont mélangés entre eux immé diatement en amont de la cavité de moulage dans une tête d'injection. Parmi les matières utilisables en R.I.M., on choisira celles capables de supporter des températures élevées, de l'ordre de 180° - 200° C, c'est-à-dire des matières telles qu'un polyisocyanurate, polycarbonate, polyacrylamate, polyester ou analogue.

Pour avoir les caractéristiques mécaniques et thermiques voulues (autoportance, rigidité, résistance mécanique, tenue en température), la pièce moulée peut comprendre une charge, par exemple minérale, et un élément de renfort, tel qu'un mat de verre 20 qui est en général placé sur le fond de moule, c'est-à-dire sur la paroi 22 de la cavité de moulage 18 définie par la partie inférieure 14 du moule 10.

Pour éviter que la structure de l'élément de renfort 20 ne soit visible sur la surface extérieure de la pièce moulée, l'invention prévoit de déposer, sur la paroi 22, une couche 24 d'un produit tel qu'une peinture primaire, puis de positionner dans la cavité de moulage 18, sur cette couche de produit 24, l'élément de renfort 20 et éventuellement des inserts, par exemple métalliques, qui serviront à la fixation de la pièce moulée. La peinture de la couche 24 doit être chimiquement compatible avec la matière synthétique de la pièce, c'est-à-dire doit polymériser suivant le même type de réaction, pour s'accrocher à cette matière, par exemple par formation d'un copolymère à l'interface ente la peinture et la matière synthétique de la pièce.

La peinture utilisée pour la couche 24 est avantageusement électroconductrice et auto-démoulante.

Le procédé de fabrication de la pièce moulée selon l'invention est le suivant :
le moule 10 étant ouvert, on dépose sur la paroi 22 de la partie inférieure 14 du moule une couche 24 de peinture, par exemple par pulvérisation, et on laisse évaporer le solvant de cette peinture. On place ensuite l'élément de renfort 20 et les inserts éventuels dans le fond du moule, sur la couche 24, puis on ferme le moule et on injecte dans la cavité de moulage 18 la matière synthétique polymérisable destinée à former la pièce moulée. On utilise de préférence le procédé R.I.M., selon lequel les différents composants de cette matière synthétique sont mélangés immédiatement avant d'être injectés dans la cavité de moulage. Après polymérisation, le moule 10 est ouvert, pour le démoulage de la pièce de carrosserie. Ce démoulage est facilité lorsque la peinture utilisée pour former la couche superficielle 24 est auto-démoulante.

La pièce moulée ainsi obtenue a un bon aspect de surface, du fait que l'élément de renfort 20 est recouvert par la couche 24 de peinture.

Ce procédé permet en particulier d'obtenir des pièces de carrosserie ayant un aspect extérieur grainé, permettant de cacher la texture de l'élément de renfort 20 recouvert par la couche de peinture 24.

La pièce de carrosserie ainsi obtenue peut être assemblée à d'autres pièces de carrosserie, par exemple métalliques, sur une chaîne de construction, puis passée sans inconvénients dans les bains de cataphorèse et de peinture à température relativement élevée.

On pourrait bien entendu obtenir un résultat semblable, si la pièce était moulée par disposition de l'élément de renfort 20 sur le fond du moule, puis injection de la matière synthétique polymérisable dans la cavité de moulage, mais il serait alors nécessaire de dégraisser la surface extérieure de la pièce moulée, d'y déposer une couche de peinture primaire et de cuire cette couche avant de pouvoir assembler la pièce moulée aux autres pièces de la carrosserie, ce qui serait beaucoup plus onéreux.

Dans la variante de réalisation représentée en figure 2, le procédé selon l'invention consiste d'abord à déposer une couche 24 de produit fluide, tel qu'une peinture, sur la paroi 22 de la partie inférieure 14 du moule, puis à déposer sur cette couche 24 une couche 26 d'une matière synthétique polymérisable, ayant une épaisseur de l'ordre de 1 à 2 mm, et à placer sur cette couche 26 l'élément de renfort 20 et les inserts éventuels, avant d'injecter dans la cavité de moulage 18 une matière synthétique polymérisable qui est identique ou semblable à celle du procédé de la figure 1. Les matières des couches 24 et 26 sont chimiquement compatibles entre elles et avec la matière plastique injectée, pour assurer une bonne liaison entre elles.

Dans la pièce moulée ainsi obtenue, la couche 26 de matière synthétique masque complètement l'élément de renfort 20 et est elle-même recouverte par la couche 24 de peinture, de sorte que cette pièce moulée a un aspect de surface de très haute qualité (de classe A selon les appellations américaines).

La matière synthétique utilisée pour former la couche 26 est une matière polymérisable, utilisable en R.I.M., du type polyisocyanurate ou polyurée, qui va former une peau fine et lisse sur l'élément de renfort 20. En pratique, cette peau recouvre complètement l'élément de renfort, qui garnit la cavité de moulage. Comme la matière polymérisable utilisée pour former cette peau va venir en contact avec la surface interne de la partie supérieure 12 du moule, on peut choisir une matière autodémoulante.

Une pièce moulée selon l'invention peut avoir, par exemple, la composition suivante :
- matière synthétique polymérisable injectée : polyisocyanurate
- élément de renfort 20 : mat de verre
- couche 24 : polyuréthane bi-composant, conducteur et auto-démoulant
- couche 26 : polyisocyanurate.
- la température et la pression d'injection dans le moule peuvent varier entre 50 et 150° C, et 3 et 40 bars respectivement, selon la matière utilisée.

De façon générale, le procédé selon l'invention permet d'obtenir des pièces de carrosserie moulées en matière synthétique, ayant à volonté un aspect classe A ou un aspect grainé, qui peuvent être assemblées à des pièces métalliques de carrosserie et subir ensuite les traitements habituels de cataphorèse et de peinture de ces pièces métalliques.

## Revendications

1. Pièce moulée de carrosserie pour véhicule, réalisée en une matière synthétique polymérisée et comprenant une charge, par exemple minérale et/ou un élément de renfort (20) tel qu'un mat de verre, éventuellement des inserts de fixation, et une couche superficielle lisse (24) de peinture notamment de peinture primaire, au moins sur sa surface extérieure visible, caractérisée en ce qu'elle est réalisée en matière résistant à des températures élevées de l'ordre de 180° - 200° C par exemple et en ce que la peinture de la couche superficielle et la matière synthétique polymérisée sont chimiquement compatibles et ont des réactions de polymérisation de même type permettant l'accrochage de ladite matière et de la peinture l'une sur l'autre.

2. Pièce selon la revendication 1, caractérisé en ce que ladite peinture est électroconductrice et/ou auto-démoulante.

3. Pièce selon la revendication 1 ou 2, caractérisée en ce qu'elle comprend une couche intermédiaire (26) d'une autre matière synthétique, entre l'élément de renfort (20) et ladite couche superficielle (24) de peinture, la matière de cette couche intermédiaire étant chimiquement compatible avec la peinture et la matière synthétique précitées.

4. Pièce selon l'une des revendications 1 à 3, caractérisée en ce que la ou les matières synthétiques précitées sont du type utilisable en procédé R.I.M., telles qu'un polyisocyanurate, un polycarbonate, un polyacrylamate, un polyester ou une polyurée, respectivement.

5. Procédé de fabrication de pièce moulée de carrosserie pour véhicule, consistant à déposer, sur des parois (22) délimitant une cavité de moulage, une couche (24) de peinture fluide, notamment de peinture primaire, à placer dans la cavité de moulage (18) un élément de renfort (20), tel par exemple qu'un mat de verre et/ou des inserts destinés à permettre la fixation ultérieure de la pièce, puis à injecter dans la cavité de moulage une matière synthétique polymérisable, caractérisé en ce qu'il consiste à mouler la pièce en une matière synthétique résistant à des températures élevées, de l'ordre de 180° - 200° C par exemple, et qui est chimiquement compatible avec ladite peinture et a le même type de réaction de polymérisation que celle-ci.

6. Procédé selon la revendication 5, caractérisé en ce que la peinture formant la couche superficielle (24) est électroconductrice.

7. Procédé selon la revendication 5 ou 6, caractérisé en ce que la peinture formant la couche superficielle (24) est auto-démoulante.

8. Procédé selon l'une des revendications 5 à 7, caractérisé en ce que, après le dépôt de ladite couche (24) de peinture sur les parois (22) de la cavité de moulage et avant de placer l'élément de renfort (20) et les inserts éventuels dans cette cavité, il consiste à déposer sur la couche (24) de peinture une couche (26) d'une autre matière synthétique polymérisable, chimiquement compatible avec la matière synthétique injectée et avec la peinture de la couche superficielle (24).

9. Procédé selon la revendication 8, caractérisé en ce que ladite autre couche (26) de matière synthétique polymérisable a une épaisseur de l'ordre de 1 à 2 mm.

10. Procédé selon la revendication 8 ou 9, caractérisé en ce que cette autre matière synthétique polymérisable est du type utilisable en procédé R.I.M., telle par exemple qu'un polyisocyanurate ou une polyurée.

11. Procédé selon l'une des revendications 5 à 10, caractérisé en ce que la matière synthétique injectée dans la cavité de moulage (18) est du type utilisable en procédé R.I.M., tel par exemple qu'un polyisocyanurate, un polycarbonate, un polyacrylamate, un polyester.

## Claims

1. A moulded bodywork part for a vehicle, produced from a polymerised synthetic material and comprising a for example mineral filler and/or a reinforcing element (20) such as a glass mat, possibly fixing inserts, and a smooth surface coating (24) of paint, particularly priming paint, at least on its visible outer surface, characterised in that it is produced in a material which will withstand high temperatures of around 180° to 200°C for example and in that the paint used for the surface coating and the polymerised synthetic material are chemically compatible and display polymerisation reactions of the same type, permitting the said material and the said paint to bond to each other.

2. A part according to Claim 1, characterised in that the said paint is self-stripping and electroconductive.

3. A part according to Claim 1 or 2, characterised in that it comprises an intermediate coat (26) of another synthetic material between the reinforcing element (20) and the said surface coating (24) of smooth paint, the substance of this intermediate coat being chemically compatible with the aforesaid paint and synthetic material.

4. A part according to one of Claims 1 to 3, characterised in that the aforesaid synthetic material or materials is or are of the type which can be used in an R.I.M. process, such as a polyisocyanurate, a polyacrylamate, a polyester or a polyurea respectively.

5. A method of producing a moulded bodywork part for a vehicle and consisting in depositing on walls (22) defining a moulding cavity, a layer (24) of a fluid paint particularly a priming paint, in placing in the moulding cavity (18) a reinforcing element (20) such as for example a glass mat and/or inserts intended to permit of subsequent attachment of the part, and then in injecting a polymerisable synthetic material into the moulding cavity, characterised in that it consists of moulding the part in a synthetic material which is resistant to high temperatures of around 180° to 200°C for example, the injected material being chemically compatible with the said paint and having the same type of polymerisation reaction as the latter.

6. A method according to Claim 5, characterised in that the paint forming the surface coating (24) is electrically conductive.

7. A method according to Claim 5 or 6, characterised in that the paint forming the surface coating (24) is auto-stripping.

8. A method according to any one of Claims 5 to 7, characterised in that after deposition of the said coating (24) of paint on the walls (22) of the moulding cavity and prior to positioning the reinforcing element (20) and the possible inserts in this cavity, it consists of depositing on the coating (24) of paint a coat (26) of another polymerisable synthetic material which is chemically compatible with the injected synthetic material and with the paint of the surface coating (24).

9. A method according to Claim 8, characterised in that the said other coat (26) of polymerisable synthetic material has a thickness of around 1 to 2 mm.

10. A method according to Claim 8 or 9, characterised in that this other polymerisable synthetic material is of the type which can be used in an R.I.M. process, such as for example a polyisocyanurate or a polyurea.

11. A method according to one of Claims 5 to 10, characterised in that the synthetic material injected into the moulding cavity (18) is of the type which can be used in an R.I.M. process, such as for example a polyisocyanurate, a polycarbonate, a polyacrylamate, a polyester.

## Patentansprüche

1. Gegossenes Karosserieteil für Fahrzeuge, das aus polymerisiertem synthetischen Material hergestellt ist, und einen Füllstoff, zum Beispiel einen mineralischen, und/oder ein Verstärkungselement (20), wie zum Beispiel eine Glasfasermatte, unter Umständen Einlagen zur Fixierung, und eine glatte Oberflächenschicht (24) aus Lackfarbe, zumindest an der äußeren sichtbaren Oberfläche eine Grundierung, vorzugsweise aus Grundierungslack, umfaßt, dadurch gekennzeichnet, daß es aus einem Material hergestellt ist, das erhöhten Temperaturen, zum Beispiel in der Größenordnung zwischen 180 und 200 °C widersteht, und dadurch, daß der Lack der Oberflächenschicht und das polymerisierte synthetische Material chemisch kompatibel sind und Polymerisationsreaktionen vom gleichen Typ eingehen, die eine Verbindung des besagten Materials und des Lacks miteinander erlauben.

2. Teil nach Anspruch 1, dadurch gekennzeichnet, daß der besagte Lack elektrisch leitend ist und/oder sich selbst aus der Form löst.

3. Teil nach Anspruch 1 oder 2, dadurch gekennzeichnet, daß es eine Zwischenschicht (26) aus einem anderen synthetischen Material, zwischen dem Verstärkungselement (20) und der besagten Lackschicht an der Oberfläche (24) umfaßt, wobei das Material dieser Zwischenschicht chemisch mit dem Lack und dem vorher genannten synthetischen Material kompatibel ist.

4. Teil nach einem der Ansprüche 1 bis 3, dadurch gekennzeichnet, daß das oder die vorher genannten synthetischen Materialien von einer Art sind, die im RIM-Verfahren verwendbar sind, wie zum Beispiel ein Polyisocyanat, ein Polycarbonat, ein Polyacrylat, ein Polyester oder ein Polyurethan, respektive.

5. Verfahren zur Herstellung eines gegossenen Karosserieteils für Kraftfahrzeuge, das darin besteht, daß auf die Wände (22), die eine Gußform begrenzen, eine Schicht (24) aus flüssigem Lack, insbesondere Grundierungslack, aufgetragen wird, in der Gußform (18) ein Verstärkungselement (20), wie zum Beispiel eine Glasfasermatte und/oder Einlagen, die die spätere Fixierung des Teils ermöglichen, angebracht werden, dann in die Gußform ein synthetisches polymerisierbares Material eingespritzt wird, dadurch gekennzeichnet, daß es darin besteht, das Teil aus einem synthetischen Material zu gießen, das erhöhten Temperaturen, zum Beispiel zwischen 180 und 200 °C widersteht, und das chemisch mit dem besagtem Lack kompatibel ist und Polymerisationsreaktionen vom gleichen Typ wie dieser eingeht.

6. Verfahren nach Anspruch 5, dadurch gekennzeichnet, daß der die Oberflächenschicht bildende Lack (24) elektrisch leitend ist.

7. Verfahren nach Anspruch 5 oder 6, dadurch gekennzeichnet, daß der die Oberflächenschicht bildende Lack sich selbständig aus der Form löst.

8. Verfahren nach einem der Ansprüche 5 bis 7, dadurch gekennzeichnet, daß es nach dem Auftragen der besagten Lackschicht (24) auf die Wände (22) der Gußform und vor dem Anbringen des Verstärkungselementes (20) und der eventuellen Einlagen in diese Gußform darin besteht, daß auf die Lackschicht (24) eine Schicht (26) aus einem anderen synthetischen polymerisierbaren Material, das chemisch mit dem eingespritzten synthetischen Material und mit dem Lack der Oberflächenschicht (24) kompatibel ist, abgeschieden wird.

9. Verfahren nach Anspruch 8, dadurch gekennzeichnet, daß die besagte andere Schicht (26) aus synthetischem polymerisierbaren Material eine Dicke in der Größenordnung zwischen einem und 2 Millimeter aufweist.

10. Verfahren nach Anspruch 8 oder 9, dadurch gekennzeichent, daß dieses andere synthetische polymerisierbare Material von einer Art ist, die im RIM-Verfahren verwendbar ist, zum Beispiel ein Polyisocyanat oder ein Polyurethan.

11. Verfahren nach einem der Ansprüche 5 bis 10, dadurch gekennzeichnet, daß das in die Gußform eingespritzte synthetische Material von einer Art ist, die im RIM-Verfahren verwendbar sind, wie zum Beispiel ein Polyisocyanat, ein Polycarbonat, ein Polyacrylat, ein Polyester.
